# EUROPEAN PATENT APPLICATION

(11) **EP 4 822 765 A1**
(43) Date of publication of application: **14.10.2026**
(21) Application number: 25794753.1
(22) Date of filing: 24.04.2025
(51) Int. Cl.: H01M 4/136, H01M 4/58, H01M 4/583, H01M 4/62, H01M 10/052, H01M 4/02

(54) **POSITIVE ELECTRODE FOR LITHIUM-SULFUR BATTERIES AND LITHIUM-SULFUR BATTERIES CONTAINING SAME**

(30) Priority: 24.04.2024 KR 20240054905
(71) Applicant: LG Energy Solution, Ltd., Seoul 07335 (KR)
(72) Inventor: CHOI, Sang-A, Daejeon 34122 (KR); KIM, Bong-Soo, Daejeon 34122 (KR); AHN, Jee-Hyun, Daejeon 34122 (KR)
(74) Representative: Goddar, Heinz J.
(86) International application number: PCT/KR2025/005578
(87) International publication number: WO 2025/226065

(57) **Abstract**

A positive electrode for a lithium-sulfur battery according to the present disclosure includes polyacrylic acid, polyacrylamide, carboxymethyl cellulose and styrene-butadiene rubber in predetermined amounts as a binder polymer. The positive electrode for the lithium-sulfur battery may ensure high adhesion strength between a positive electrode active material layer and a positive electrode current collector, and sufficient output performance when used in a lithium-sulfur battery.

## Description

### TECHNICAL FIELD

The present disclosure relates to a positive electrode for a lithium-sulfur battery and a lithium-sulfur battery including the same.

This application is based on and claims priority from Korean Patent Application No. 10-2024-0054905 filed on April 24, 2024 with the Korean Intellectual Property Office, the disclosure of which is incorporated herein in its entirety by reference.

### BACKGROUND

As lithium secondary batteries are used in a wide range of applications including portable electronic devices as well as electric vehicles (EVs) and electric storage systems (ESSs), the demand for lithium secondary batteries with higher capacity, higher energy density and longer lifespan is increasing.

Among lithium secondary batteries, lithium-sulfur batteries are a battery system using a sulfur-based material including a sulfur-sulfur (S-S) bond as a positive electrode active material, and lithium metal, a carbon-based material in which intercalation/deintercalation of lithium ions takes place, silicon or tin that forms an alloy with lithium as a negative electrode active material.

In lithium-sulfur batteries, sulfur, the main component of the positive electrode active material, has low atomic weight, is abundant in nature and can be found around the world, and is cheap, non-toxic and environmentally friendly.

The positive electrodes of lithium-sulfur batteries are generally manufactured using aqueous binder polymers. However, the use of aqueous binder polymers is accompanied by low adhesion performance between positive electrode active material layers and positive electrode current collectors. To address this issue, attempts have been made to apply highly adhesive binder polymers, but in this case, a problem of low output performance is raised.

### DISCLOSURE

### Technical Problem

To solve the above-described problems, the present disclosure is directed to providing a positive electrode for a lithium-sulfur battery using a binder polymer to increase adhesion strength between a positive electrode active material layer and a positive electrode current collector and improve output performance of the battery, and a lithium-sulfur battery including the same.

### Technical Solution

In an aspect of the present disclosure, provided are a positive electrode for a lithium-sulfur battery and a lithium-sulfur battery of the following embodiments.

The positive electrode for the lithium-sulfur battery according to a first embodiment includes:
a positive electrode active material layer including a sulfur-carbon composite; and a binder polymer, and
the binder polymer may include a polyacrylic acid, a polyacrylamide, a carboxymethyl cellulose and a styrene-butadiene rubber.

According to a second embodiment, in the first embodiment,
the binder polymer may be included in an amount of 1 to 10 parts by weight based on total 100 parts by weight of the total positive electrode active material layer.

According to a third embodiment, in the first or second embodiment,
the polyacrylic acid may be included in an amount of 5 to 30 parts by weight based on total 100 parts by weight of the binder polymer.

According to a fourth embodiment, in any one of the first to third embodiments,
the polyacrylic acid may be included in an amount of 5 to 25 parts by weight based on total 100 parts by weight of the binder polymer.

According to a fifth embodiment, in any one of the first to fourth embodiments,
the polyacrylamide may be included in an amount of 10 to 35 parts by weight based on total 100 parts by weight of the binder polymer.

According to a sixth embodiment, in any one of the first to fifth embodiments,
the polyacrylamide may be included in an amount of 10 to 31.25 parts by weight based on total 100 parts by weight of the binder polymer.

According to a seventh embodiment, in any one of the first to sixth embodiments,
the carboxymethyl cellulose may be included in an amount of 10 to 20 parts by weight based on total 100 parts by weight of the binder polymer.

According to an eighth embodiment, in any one of the first to seventh embodiments,
the carboxymethyl cellulose may be included in an amount of 12.5 to 20 parts by weight based on total 100 parts by weight of the binder polymer.

According to a ninth embodiment, in any one of the first to eighth embodiments,
the styrene-butadiene rubber may be included in an amount of 40 to 60 parts by weight based on total 100 parts by weight of the binder polymer.

According to a tenth embodiment, in any one of the first to ninth embodiments,
the styrene-butadiene rubber may be included in an amount of 45 to 60 parts by weight based on total 100 parts by weight of the binder polymer.

According to an eleventh embodiment, in any one of the first to tenth embodiments,
the positive electrode for the lithium-sulfur battery may have the positive electrode active material layer on at least one surface of an electrode current collector, and an adhesion strength between the electrode current collector and the positive electrode active material layer may be 35 gf/2cm or more.

A lithium-sulfur battery according to a twelfth embodiment includes:
a positive electrode; a negative electrode; and an electrolyte solution, and
the positive electrode may be the positive electrode for the lithium-sulfur battery according to any one of the first to eleventh embodiments.

According to a thirteenth embodiment, in the twelfth embodiment,
the lithium-sulfur battery may have an output of 2.2 Wh/kg or more.

According to a fourteenth embodiment, in the twelfth or thirteenth embodiment, the lithium-sulfur battery may further include a separator present between the positive electrode and the negative electrode.

### Advantageous Effects

The positive electrode for the lithium-sulfur battery according to the present disclosure includes four types of binder polymers at an optimal ratio, thereby ensuring high adhesion performance between the positive electrode active material layer and the positive electrode current collector and sufficient output performance of the lithium-sulfur battery.

### BEST MODE

Hereinafter, the present disclosure will be described in detail. It should be understood that the terms or words used in the specification and the appended claims should not be construed as limited to general and dictionary meanings, and rather, should be interpreted based on the meanings and concepts corresponding to the technical aspects of the present disclosure on the basis of the principle that the inventor is allowed to define the terms properly for the best explanation.

Accordingly, the embodiments described herein are provided to describe the present disclosure by way of example but not intended to be limiting, so it should be understood that other equivalents and modifications could be made thereto at the time the application was filed.

It should be further understood that "include", "comprise" or "have" when used in the specification, specifies the presence of the stated elements and does not preclude the presence or addition of one or more other elements unless expressly stated otherwise.

The terms "about" and "substantially" are used herein in the sense of at, or nearly at, when given the manufacturing and material tolerances inherent in the stated circumstances and are used to prevent the unscrupulous infringer from unfairly taking advantage of the present disclosure where exact or absolute figures are stated as an aid to understanding the present disclosure.

In this specification, 'A and/or B' refers to either A or B or both.

Unless stated otherwise, the temperature as used herein refers to Celsius scale of temperature, and its unit is °C.

The first aspect of the present disclosure relates to a positive electrode for a lithium-sulfur battery.

The positive electrode for the lithium-sulfur battery according to an aspect of the present disclosure includes:
a positive electrode current collector; and a positive electrode active material layer present on at least one surface of the positive electrode current collector,
wherein the positive electrode active material layer includes a sulfur-carbon composite; and a binder polymer,
wherein the binder polymer includes polyacrylic acid, polyacrylamide, carboxymethylcellulose and styrene-butadiene rubber.

In the technical field of lithium-sulfur batteries, aqueous binder polymers are used to manufacture the positive electrode, and insufficient adhesion strength between the positive electrode active material layer and the positive electrode current collector is a challenge. To solve the problem, attempts have been made to apply binder polymers having strong adhesion strength with respect to the positive electrode current collector. However, to ensure adhesion strength as well as sufficient cell performance, it is necessary to use many types of binder polymers and use them at an optimal composition ratio.

According to the present disclosure, the binder polymer included in the positive electrode active material layer of the positive electrode for the lithium-sulfur battery includes polyacrylic acid (PAA), polyacrylamide, carboxymethylcellulose (CMC) and styrene-butadiene rubber (SBR). The binder polymer may bind the positive electrode active material to the positive electrode current collector and interconnect the positive electrode active material to increase the bond strength between them.

In an embodiment of the present disclosure, the binder polymer may be included in an amount of 1 to 10 parts by weight, 2 to 8 parts by weight, or 3 to 5 parts by weight based on the total 100 parts by weight of the positive electrode active material layer. When the binder polymer is included in the aforementioned range of amounts, the lithium-sulfur battery may have sufficient adhesion strength between the positive electrode active material layer and the positive electrode current collector as well as high cell performance.

In an embodiment of the present disclosure, the polyacrylic acid may be included in an amount of 5 to 30 parts by weight, 5 to 25 parts by weight, 6.25 to 25 parts by weight, or 12.5 to 25 parts by weight based on the total 100 parts by weight of the binder polymer. When the amount of the polyacrylic acid falls within the aforementioned range , the lithium-sulfur battery may ensure adhesion strength between the positive electrode current collector and the positive electrode active material layer as well as proper output.

In an embodiment of the present disclosure, the weight average molecular weight of the polyacrylic acid may be 50,000 to 1,500,000 g/mol, 100,000 to 1,500,000 g/mol, 200,000 to 1,500,000 g/mol, 300,000 to 1,500,000 g/mol, 400,000 to 1,500,000 g/mol, 500,000 to 1,500,000 g/mol, 100,000 to 1,400,000 g/mol, 100,000 to 1,300,000 g/mol, 200,000 to 1,400,000 g/mol, 300,000 to 1,400,000 g/mol, 400,000 to 1,400,000 g/mol, or 500,000 to 1,300,000 g/mol. When the weight average molecular weight of the polyacrylic acid falls within the aforementioned range, the lithium-sulfur battery may ensure adhesion strength between the positive electrode current collector and the positive electrode active material layer as well as proper output.

The weight average molecular weight may be measured under gel permeation chromatography (GPC, PL GPC220, Agilent Technologies) analysis conditions below.
- Column: PL MiniMixed B x 2
- Solvent: THF
- Flow rate: 0.3 ml/min
- Sample concentration: 2.0 mg/ml
- Injection volume: 10 µl
- Column temperature : 40°C
- Detector: Agilent RI detector
- Standard: Polystyrene (third degree polynomial fit)
- Data processing: ChemStation

In an embodiment of the present disclosure, the polyacrylamide may be included in an amount of 10 to 35 parts by weight, 10 to 31.25 parts by weight, 12.5 to 35 parts by weight, 12.5 to 31.25 parts by weight, or 12.5 to 25 parts by weight based on the total 100 parts by weight of the binder polymer. When the polyacrylamide is included in the aforementioned amount, it may be possible to ensure sufficient adhesion strength between the positive electrode active material layer and the positive electrode current collector while maintaining proper output of the battery. When the polyacrylamide is included in an excessive amount, a larger binder polymer volume at the interface of the positive electrode active material layer may increase resistance and reduce the output of the battery.

In an embodiment of the present disclosure, the weight average molecular weight of the polyacrylamide may be 50,000 to 1,500,000 g/mol, 100,000 to 1,500,000 g/mol, 200,000 to 1,500,000 g/mol, 300,000 to 1,500,000 g/mol, 400,000 to 1,500,000 g/mol, 500,000 to 1,500,000 g/mol, 100,000 to 1,400,000 g/mol, 100,000 to 1,300,000 g/mol, 200,000 to 1,400,000 g/mol, 300,000 to 1,400,000 g/mol, 400,000 to 1,400,000 g/mol, or 500,000 to 1,300,000 g/mol. When the weight average molecular weight of the polyacrylamide falls within the aforementioned range, it may be possible to ensure sufficient adhesion strength between the positive electrode active material layer and the positive electrode current collector while maintaining proper output of the battery.

The weight average molecular weight of the polyacrylamide may be measured by the same method as the method for measuring the weight average molecular weight of the polyacrylic acid.

In an embodiment of the present disclosure, the carboxymethyl cellulose may be included in an amount of 10 to 20 parts by weight, 12.5 to 20 parts by weight, or 10 to 15 parts by weight based on the total 100 parts by weight of the binder polymer. When the carboxymethyl cellulose is included in the aforementioned range of amounts, the carboxymethyl cellulose may act as a thickening agent when applying a slurry for forming the positive electrode active material layer to the current collector, to keep the slurry viscous while preventing the slurry from flowing down on the current collector, so as to form the positive electrode active material layer with a proper thickness.

In an embodiment of the present disclosure, the carboxymethyl cellulose may have viscosity of 200 to 5000 cps of a 1 wt% aqueous solution. When the viscosity of the carboxymethyl cellulose falls within the aforementioned range, the positive electrode active material layer may be formed with a proper thickness.

The viscosity of the 1 wt% of carboxymethyl cellulose in water may be measured at room temperature at a speed of 12 rpm using Brookfield viscometer No. 4 spindles (model name: LVDV2T).

In an embodiment of the present disclosure, the styrene-butadiene rubber may be included in an amount of 40 to 60 parts by weight, 45 to 60 parts by weight, 40 to 55 parts by weight, or 45 to 55 parts by weight based on the total 100 parts by weight of the binder polymer. When the styrene-butadiene rubber is included in the aforementioned range of amounts, it may be possible to ensure sufficient adhesion strength between the positive electrode active material layer and the positive electrode current collector.

In an embodiment of the present disclosure, the gel content of the styrene-butadiene rubber may be from 90 to 100%. When the gel content of the styrene-butadiene rubber falls within the aforementioned range, it may be possible to ensure sufficient adhesion strength between the positive electrode active material layer and the positive electrode current collector.

The gel content of the binder polymer such as the styrene-butadiene rubber may be measured by a method commonly used in the art, and may be, for example, calculated through the following measurement method.

First, when measuring the binder polymer under electrolyte solution conditions, the binder polymer is added to the electrolyte solution and stored for approximately 48 hours in the desired temperature condition. The initial mass of the binder polymer added is measured, and after storage, the binder polymer is removed and the mass of the binder polymer wetted with the electrolyte solution is measured.

Subsequently, the binder polymer is immersed in ethanol for approximately 24 hours to remove the components of the electrolyte solution, dried at about 25°C for 24 hours and the mass of the binder polymer is measured again.

The gel content (%) may be calculated using a ratio of the mass of the binder polymer that has been immersed in ethanol and then dried to the initial mass of the binder polymer.$Gel content \left(%\right) = \left(B/A\right) \times 100$

A is the mass of the binder polymer, and B is the mass of the binder polymer having the mass A, subjected to immersion in ethanol for 24 hours and drying after it has been stored in the electrolyte solution for 48 hours.

In an embodiment of the present disclosure, the glass transition temperature (Tg) of the styrene-butadiene rubber may be -20 to 20°C. When the glass transition temperature of the styrene-butadiene rubber falls within the aforementioned range, it may be possible to ensure sufficient adhesion strength between the positive electrode active material layer and the positive electrode current collector.

In an embodiment of the present disclosure, the positive electrode active material layer may further include another binder polymer commonly used in the art, for example, fluororesin-based binders including polyvinylidene fluoride (PVdF) or polytetrafluoroethylene (PTFE); rubber-based binders including acrylonitrile-butadiene rubber or styrene-isoprene rubber; cellulose-based binders including starch, hydroxy propyl cellulose or regenerated cellulose; polyalcohol-based binders; polyolefin-based binders including polyethylene or polypropylene; polyimide-based binders; polyester-based binders; and silane-based binders; or a mixture thereof, or a copolymer including two or more of their repeating units.

In an embodiment of the present disclosure, the sulfur-carbon composite as the positive electrode active material includes a porous carbon material and a sulfur-based material incorporated into the porous carbon material.

The sulfur-based material may include sulfur and/or sulfide, and specifically, disulfide compounds such as inorganic sulfur (S₈), Li₂Sₙ (n≥1), 2,5-dimercapto-1,3,4-thiadiazole or 1,3,5-trithiocyanuic acid, organic sulfur compounds, or two or more thereof. Preferably, the sulfur-based material may include inorganic sulfur (S₈).

In addition, the positive electrode active material may further include at least one type of additive selected from transition metal elements, Group IIIA elements, Group IVA elements, sulfur compounds of these elements, and alloys of sulfur with these elements. The transition metal elements include Sc, Ti, V, Cr, Mn, Fe, Co, Ni, Cu, Zn, Y, Zr, Nb, Mo, Tc, Ru, Rh, Pd, Os, Ir, Pt, Au or Hg, the Group IIIA elements may include Al, Ga, In or Tl, and the Group IVA elements may include Ge, Sn or Pb.

The porous carbon material may include a crystalline or amorphous carbon material, and may include conductive carbon. The carbon material provides a framework that holds the sulfur and/or sulfide uniformly and stably, and compensates for low electrical conductivity of the sulfur and/or sulfide, thereby enhancing electrochemical reaction.

The porous carbon material may be produced by carbonization of various carbon-based precursors, and include protrusions, recesses and/or pores inside. The average pore diameter of the porous carbon material may be 1 nm to 200 nm, and the porosity of the porous carbon material may be 10 vol% to 90 vol% of the total volume of the carbon material. When the average diameter of the porous carbon material falls within the aforementioned range, the mechanical strength of the porous carbon material may be maintained.

The porous carbon material is not limited to a particular one and may include those commonly used in the lithium-sulfur battery, for example, spherical, rod-like, needle-like, plate-like, tube-like or bulky. In addition, the porous carbon material may have high specific surface area. For example, the porous carbon material may include graphite, graphene, Super-P, carbon black, Denka black, acetylene black, Ketjen black, channel black, furnace black, lamp black, thermal black, carbon fibers, carbon nanofibers, carbon nanotubes (SWCNT, MWCNT), carbon nanowires, carbon nanorings, carbon fabrics, fullerene (C₆₀), or two or more thereof.

The sulfur-carbon composite in which the sulfur-based material is incorporated into the porous carbon material may include the sulfur-based material in an amount of 60 wt% to 90 wt% based on the total 100 wt% of the sulfur-carbon composite. The amount of the sulfur-based material within the aforementioned range may lead to the optimal amount of the sulfur-based material and the optimal amount of the porous carbon material, so the binder polymer for holding the sulfur-based material and the porous carbon material together may be used in the optimal amount. Accordingly, the binder polymer that may cause a resistance rise may be used in the optimal amount, thereby improving the battery performance of the lithium-sulfur battery.

In the sulfur-carbon composite, the sulfur-based material may fill at least a part of the internal space (for example, pores) of the porous carbon material, or along with this or independently of this, may be located outside such that the sulfur-based material coats at least a part of the surface of the porous carbon material. In a specific embodiment, the sulfur-based material may be located at an area of less than 100%, 1% to 95%, or 60% to 90% of the surface of the porous carbon material. The presence of the sulfur-based material within the aforementioned range may improve electrolyte wetting and electrical conductivity.

The method for producing the sulfur-carbon composite is not limited to a particular one and may include any method commonly used in the art. For example, the sulfur-carbon composite may be manufactured by mixing the sulfur-based material such as sulfur (S₈) with the porous carbon material and performing thermal treatment.

The sulfur-carbon composite may be included in an amount of 50 to 95 parts by weight, 60 to 95 parts by weight, or 70 to 95 parts by weight based on the total 100 parts by weight of the positive electrode active material layer. When the sulfur-carbon composite is included in the aforementioned range of amounts, sufficient electrochemical reaction may take place at the positive electrode.

In an embodiment of the present disclosure, the positive electrode active material layer may further include a conductive material.

The conductive material is used to electrically connect the electrolyte solution to the positive electrode active material to act as a movement path of electrons from the positive electrode current collector to the positive electrode active material, and improve electrical conductivity or ionic conductivity. The conductive material is not limited to a particular type and may include any material having conductive properties. The conductive material may include, for example, carbon black such as Super-P, Denka black, acetylene black, Ketjen black, channel black, furnace black, lamp black, or thermal black; carbon derivatives such as carbon nanotubes, graphene or fullerene; conductive fibers such as carbon fibers or metal fibers; fluorocarbon; metal powder such as aluminum or nickel powder; or conductive polymer such as polyaniline, polythiophene, polyacetylene or polypyrrole, used singly or in combination. The conductive material may be included in an amount of 0.01 to 30 parts by weight based on the total 100 parts by weight of the positive electrode active material layer. When the conductive material is included in the aforementioned range of amounts, the movement of electrons from the current collector to the positive electrode active material may be enhanced, and ionic conductivity or electrical conductivity of the positive electrode may be properly maintained.

In an embodiment of the present disclosure, the positive electrode for the lithium-sulfur battery may have only the positive electrode active material layer without the current collector, i.e., a so-called current collector-free type, or may have the positive electrode active material layer on at least one surface of the positive electrode current collector.

The positive electrode current collector is not limited to a particular one and may include any type of current collector having high conductivity without causing side reaction in the battery, commonly used in the technical field of lithium secondary batteries and lithium-sulfur batteries. For example, the positive electrode current collector may include copper, stainless steel, aluminum, nickel, titanium, calcined carbon, copper or stainless steel treated with carbon, nickel, titanium or silver on the surface, or aluminum-cadmium alloys.

The positive electrode current collector may have a thickness of 1 µm to 300 µm, but the thickness is not limited to a particular range, and may be set to an optimal range, taking into account the mechanical strength of the electrode, the productivity or the capacity of the battery.

The positive electrode active material layer may have a thickness of 1 µm to 200 µm, 5 µm to 100 µm, 10 µm to 80 µm, or 20 µm to 50 µm. When the thickness of the positive electrode active material layer falls within the aforementioned range, lithium dendrite growth may be suppressed and sufficient battery capacity may be achieved.

In an embodiment of the present disclosure, the positive electrode for the lithium-sulfur battery may have adhesion strength of 30 gf/2 cm or more, 35 gf/2 cm or more, or 35 to 100 gf/2cm between the positive electrode current collector and the positive electrode active material layer. When the adhesion strength of the positive electrode for the lithium-sulfur battery with respect to the electrode falls within the aforementioned range, sufficient adhesion strength may be achieved in the manufacture of the lithium-sulfur battery, while preventing peel-off from the separator, and the lithium-sulfur battery may have sufficient cycling life.

The adhesion strength between the positive electrode active material layer and the current collector in the positive electrode sample may be measured using UTM equipment (90° peeling test, Load Cell: 10N, Speed: 100 mm/min).

The second aspect of the present disclosure relates to a lithium-sulfur battery.

The lithium-sulfur battery according to an aspect of the present disclosure includes a positive electrode; a negative electrode; and an electrolyte solution, wherein the positive electrode is the above-described positive electrode for the lithium-sulfur battery according to an aspect of the present disclosure.

In an embodiment of the present disclosure, the lithium-sulfur battery may further include a separator between the positive electrode and the negative electrode.

In an embodiment of the present disclosure, the negative electrode may include a negative electrode current collector and a negative electrode active material layer on at least one surface of the negative electrode current collector, or may include only the negative electrode active material layer without the negative electrode current collector, i.e., a so-called current collector-free type.

The negative electrode current collector is used to support the negative electrode active material layer as described in the positive electrode current collector.

In addition to a negative electrode active material, the negative electrode active material layer may include a conductive material or a binder. In this instance, the conductive material and the binder may follow the above.

The negative electrode active material may include materials capable of reversibly intercalating or deintercalating lithium ion (Li⁺), materials that react with lithium ions to reversibly form lithium-containing compounds, lithium metals or lithium alloys.

The materials capable of reversibly intercalating or deintercalating lithium ions (Li⁺) may include, for example, crystalline carbon, amorphous carbon or a mixture thereof. The materials that react with lithium ions (Li⁺) to reversibly form lithium-containing compounds may include, for example, tin oxide, titanium nitrate or silicon. The lithium alloys may include, for example, alloys of lithium (Li) and two or more metals selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn).

According to an embodiment of the present disclosure, the negative electrode active material may include lithium metals, and specifically, may be in the form of a lithium metal foil or lithium metal powder.

In an embodiment of the present disclosure, the separator is used to separate the negative electrode from the positive electrode and provide a movement passage of lithium ions. The separator is not limited to a particular type and may include any type of separator commonly used in the lithium-sulfur battery. In particular, the separator having low resistance to the movement of electrolyte ions and high electrolyte wetting capacity may be preferred.

For example, the separator may include a porous polymer film, for example, a porous polymer film made of polyolefin-based polymer such as ethylene homopolymer, propylene homopolymer, ethylene/butene copolymer, ethylene/hexene copolymer and ethylene/methacrylate copolymer, or a laminated structure of two or more layers. In addition, the separator may include porous nonwoven fabric, for example, nonwoven fabric made of high-melting-point glass fibers or polyethylene terephthalate fibers. In addition, to ensure heat resistance or mechanical strength, the coated separator including ceramic or polymer may be used, and optionally, may be used with a single layer or multilayer structure.

In an embodiment of the present disclosure, the separator may be absent, and a solid electrolyte or a gel electrolyte may play a role of the separator.

In an embodiment of the present disclosure, the electrolyte may include a lithium salt and a solvent, and optionally, may further include an additive. The electrolyte solution is not limited to a particular type and may include any type of electrolyte solution having composition used in the lithium secondary battery, specifically the lithium-sulfur battery.

The solvent of the electrolyte may include a non-aqueous solvent, and the non-aqueous solvent is not limited to a particular type and may include any type of solvent used in the lithium-sulfur battery, and for example, ether-based solvents, ester, amide, linear carbonate and cyclic carbonate.

In an embodiment of the present disclosure, the ester may include, for example, methyl acetate, ethyl acetate, propyl acetate, methyl propionate, ethyl propionate, propyl propionate, γ-butyrolactone, γ-valerolactone, γ-caprolactone, σ-valerolactone, ε-caprolactone, or a mixture of two or more thereof, but is not limited thereto.

In an embodiment of the present disclosure, the linear carbonate may include, for example, dimethyl carbonate, diethyl carbonate, dipropyl carbonate, ethyl methyl carbonate, methyl propyl carbonate, ethyl propyl carbonate, or a mixture of two or more thereof, but is not limited thereto.

In an embodiment of the present disclosure, the cyclic carbonate may include, for example, ethylene carbonate, propylene carbonate, 1,2-butylene carbonate, 2,3-butylene carbonate, 1,2-pentylene carbonate, 2,3-pentylene carbonate, vinylene carbonate, vinyl ethylene carbonate, halogenides thereof, or mixtures of two or more thereof. The halogenides may include, for example, fluoroethylene carbonates, but are not limited thereto.

In an embodiment of the present disclosure, the non-aqueous solvent may include the ether-based solvent.

In an embodiment of the present disclosure, the ether-based solvent may be included in an amount of 80 vol% or more, for example, 85 vol% to 100 vol%, 90 vol% to 100 vol%, 95 vol%to 100 vol%, 98 vol% to 100 vol%, 90 vol% to 98 vol%, or 90 vol% to 95 vol% based on the total volume of the non-aqueous solvent. When the amount of the ether-based solvent falls within the aforementioned range based on the total volume of the non-aqueous solvent, this may have a beneficial effect on solubility of the components of the electrolyte solution such as the lithium salt, but the present disclosure is not limited thereto.

In an embodiment of the present disclosure, the ether-based solvent may include acyclic ether, cyclic ether, or a mixture thereof.

In an embodiment of the present disclosure, the acyclic ether may include, for example, dimethyl ether, diethyl ether, dipropyl ether, dibutyl ether, diisobutyl ether, ethyl methyl ether, ethyl propyl ether, ethyl tert-butyl ether, dimethoxymethane, trimethoxymethane, dimethoxyethane, diethoxyethane, dimethoxypropane, diethylene glycol dimethyl ether, diethylene glycol diethyl ether, triethylene glycol dimethyl ether, tetraethylene glycol dimethyl ether, ethylene glycol divinyl ether, diethylene glycol divinyl ether, triethylene glycol divinyl ether, dipropylene glycol dimethylene ether, butylene glycol ether, diethylene glycol ethyl methyl ether, diethylene glycol isopropyl methyl ether, diethylene glycol butyl methyl ether, diethylene glycol tert-butyl ethyl ether, ethylene glycol ethyl methyl ether, or a mixture of two or more thereof. Preferably, the acyclic ether may include dimethyl ether, dimethoxyethane, diethoxyethane, diethylene glycol dimethyl ether, triethylene glycol dimethyl ether, tetraethylene glycol dimethyl ether or a mixture of two or more thereof.

In an embodiment of the present disclosure, the cyclic ether may include, for example, 2-methylfuran, 1,3-dioxolane, 4,5-dimethyl-dioxolane, 4,5-diethyl-dioxolane, 4-methyl-1,3-dioxolane, 4-ethyl-1,3-dioxolane, tetrahydrofuran, 2-methyltetrahydrofuran, 2,5-dimethyltetrahydrofuran, 2,5-dimethoxytetrahydrofuran, 2-ethoxytetrahydrofuran, 2-methyl-1,3-dioxolane, 2-vinyl-1,3-dioxolane, 2,2-dimethyl-1,3-dioxolane, 2-methoxy-1,3-dioxolane, 2-ethyl-2-methyl-1,3-dioxolane, tetrahydropyran, 1,4-dioxane, 1,2-dimethoxybenzene, 1,3-dimethoxybenzene, 1,4-dimethoxybenzene, isosorbide dimethyl ether or a mixture of two or more thereof. Preferably, the cyclic ether may include 2-methylfuran, 1,3-dioxolane, tetrahydrofuran, 2-methyltetrahydrofuran, 2,5-dimethyltetrahydrofuran or a mixture of two or more thereof, and more preferably, 2-methylfuran.

In an embodiment of the present disclosure, the non-aqueous solvent may include a mixture of the acyclic ether and the cyclic ether.

In an embodiment of the present disclosure, the non-aqueous solvent may include dimethoxyethane (DME) and 2-methylfuran (2-MeF).

In an embodiment of the present disclosure, a volume ratio of the acyclic ether to the cyclic ether may be 95:5 to 5:95 (v/v), specifically 95:5 to 50:50, more specifically 90:10 to 70:30, or 85:15 to 75:25, or 95:5 to 80:20, or 80:20 to 5:95, or 90:10 to 80:20, or 80:20. In the present disclosure, the volume ratio corresponds to a ratio of "vol% of the acyclic ether": "vol% of the cyclic ether" in the ether-based solvent.

In an embodiment of the present disclosure, the non-aqueous solvent may not include the carbonate-based solvent in terms of the solubility of the electrolyte. Alternatively, the non-aqueous solvent may include the carbonate-based solvent in such a small amount that the carbonate-based solvent does not affect the solubility of the lithium salt, and when the non-aqueous solvent includes the carbonate-based solvent, the amount of the carbonate-based solvent may be, for example, 3 wt % or less, 2 wt% or less, 1 wt% or less, 0.5 wt% or less, or 0 wt% (i.e., none) based on the total weight of the electrolyte solution for the lithium secondary battery.

In an embodiment of the present disclosure, the lithium salt is not limited to a particular one and may include any compound that provides lithium ions, commonly used in the lithium-sulfur battery. For example, the lithium salt may include lithium bis(fluorosulfonyl)imide (LiFSI), lithium bis(trifluoromethanesulfonyl)imide (LiTFSI), LiPF_{6,} LiClO_{4,} LiAsF_{6,} LiBF_{4,} LiSbF₆, LiAlO_{4,} LiAlCl_{4,} LiCF₃SO_{3,} LiC₄F₉SO_{3,} LiN(C₂F₅SO₃)_{2,} LiN(C₂F₅SO₂)_{2,} LiN(CF₃SO₂)₂, LiCl, LiI, or LiB(C₂O₄)₂. The concentration of the lithium salt may be preferably in a range between 0.1 M and 2.0 M. When the concentration of the lithium salt falls within the aforementioned range, the electrolyte may have optimal conductivity and viscosity, thereby achieving high electrolyte performance and effective movement of lithium ions.

In an embodiment of the present disclosure, the additive may include a nitric acid-based compound, and the nitric acid-based compound may be selected from lithium nitrate (LiNO₃), potassium nitrate (KNO₃), cesium nitrate (CsNO₃), magnesium nitrate (Mg(NO₃)₂), barium nitrate (Ba(NO₃)₂), potassium nitrite (KNO₂) and cesium nitrite (CsNO₂). In this instance, the additive may be included in an amount of 0.1 wt% to 10 wt%, or 0.1 wt% to 3 wt%, or 3 wt% to 10 wt% based on the total weight of the electrolyte.

In addition to the nitric acid-based compound, the additive further may include, for example, a haloalkylene carbonate-based compound such as difluoro ethylene carbonate, pyridine, triethylphosphite, triethanolamine, cyclic ether, ethylene diamine, n-glyme, hexamethyl phosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol or aluminum trichloride, in order to improve the life characteristics of the battery, suppress the battery capacity fading or improve the discharge capacity of the battery.

In an embodiment of the present disclosure, the lithium-sulfur battery may include a coin-type battery, a pouch-type battery or a cylindrical battery, but is not limited thereto.

In an embodiment of the present disclosure, the lithium-sulfur battery may have output of 2.2 Wh/kg or more, or 2.3 Wh/kg or more.

The output may be calculated by performing a hybrid pulse power characterization (HPPC) test on the lithium-sulfur battery at 25°C. For example, the HPPC test may be performed at 25°C, the lithium-sulfur battery at SOC 75 may be discharged at 5C for 10 seconds, and the output may be obtained by dividing by the weight of each lithium-sulfur battery.

Hereinafter, the present disclosure will be described in more detail through examples, but the following examples are provided to describe the present disclosure by way of illustration, and the scope of the present disclosure is not limited thereto.

### Example 1

A sulfur-carbon composite was prepared as a positive electrode active material by mixing sulfur (S₈) and carbon nanotubes at a weight ratio of 75:25, grinding by ball milling, and placing the mixture in an oven at 155°C for 30 minutes.

The sulfur-carbon composite and a binder polymer were added to water at a weight ratio of 96:4 to prepare a positive electrode slurry. In this instance, the binder polymer was a mixture of polyacrylic acid (weight average molecular weight: 1,250,000 g/mol), polyacrylamide (weight average molecular weight : 780,000 g/mol), carboxymethyl cellulose (GLchem, GBLi1000) and styrene-butadiene rubber (Tg = 8°C) at a weight ratio of 12.5:25:12.5:50.

The positive electrode slurry was applied to two surfaces of an aluminum foil, dried at 80°C and rolled using a roll press to manufacture a positive electrode. In this instance, the loading of the positive electrode was 2.6 mAh/cm².

### Example 2

A positive electrode was prepared in the same way as Example 1, except that a mixture of polyacrylic acid, polyacrylamide, carboxymethyl cellulose and styrene-butadiene rubber at a weight ratio of 25:12.5:12.5:50 was used as the binder polymer.

### Example 3

A positive electrode was manufactured in the same way as Example 1, except that a mixture of polyacrylic acid, polyacrylamide, carboxymethyl cellulose and styrene-butadiene rubber at a weight ratio of 18.75:18.75:12.5:50 was used as the binder polymer.

### Example 4

A positive electrode was manufactured in the same way as Example 1, except that a mixture of polyacrylic acid, polyacrylamide, carboxymethyl cellulose and styrene-butadiene rubber at a weight ratio of 6.25:31.25:12.5:50 was used as the binder polymer.

### Comparative Example 1

A positive electrode was manufactured in the same way as Example 1, except that a sulfur-carbon composite and a binder polymer were added to water at a weight ratio of 97:3 and polyacrylamide was only used as the binder polymer.

### Comparative Example 2

A positive electrode was manufactured in the same way as Example 1, except that a mixture of polyacrylamide, carboxymethylcellulose and styrene-butadiene rubber at a weight ratio of 37.5:12.5:50 was used as the binder polymer.

### Comparative Example 3

A positive electrode was manufactured in the same way as Example 1, except that a sulfur-carbon composite and a binder polymer were added to water at a weight ratio of 97:3 and polyacrylic acid was only used as the binder polymer.

### Comparative Example 4

A positive electrode was manufactured in the same way as Example 1, except that a mixture of polyacrylic acid, carboxymethyl cellulose and styrene-butadiene rubber at a weight ratio of 37.5:12.5:50 was used as the binder polymer.

### Comparative Example 5

The same process as Example 1 was performed, except that a mixture of polyacrylic acid, polyacrylamide and styrene-butadiene rubber at a weight ratio of 25:25:50 was used as the binder polymer. However, a positive electrode slurry was flowable, thereby failing to attach to a current collector, resulting in a failure to manufacture a positive electrode.

TABLE 1 below summarizes the types and amounts of binders used in Examples 1 to 4 and Comparative Examples 1 to 5.

**[TABLE 1]**

| | Parts by weight of binder polymer based on total 100 weight parts of positive electrode active material layer | Parts by weight of polyacrylic acid based on total 100 parts by weight of binder polymer | Parts by weight of polyacrylami de based on total 100 parts by weight of binder polymer | Parts by weight of carboxymeth yl cellulose based on total 100 parts by weight of binder polymer | Parts by weight of styrene-butadiene rubber based on total 100 parts by weight of binder polymer |
|---|---|---|---|---|---|
| Example 1 | 4 | 12.5 | 25 | 12.5 | 50 |
| Example 2 | 4 | 25 | 12.5 | 12.5 | 50 |
| Example 3 | 4 | 18.75 | 18.75 | 12.5 | 50 |
| Example 4 | 4 | 6.25 | 31.25 | 12.5 | 50 |
| Comparative Example 1 | 3 | 0 | 100 | 0 | 0 |
| Comparative Example 2 | 4 | 0 | 37.5 | 12.5 | 50 |
| Comparative Example 3 | 3 | 100 | 0 | 0 | 0 |
| Comparative Example 4 | 4 | 37.5 | 0 | 12.5 | 50 |
| Comparative Example 5 | 4 | 25 | 25 | 0 | 50 |

### Experimental Example 1: Adhesion strength measurement

Each of the positive electrodes manufactured in Examples 1 to 4 and Comparative Examples 1 to 4 was tailored to a width of 20 mm and a length of 100 mm to prepare a positive electrode sample.

A double-sided adhesive tape 55 mm long was attached to a slide glass, and each of the as-prepared positive electrode samples of Examples 1 to 4 and Comparative Examples 1 to 4 was laminated with the slide glass using a laminator.

The adhesion strength between the positive electrode active material layer and the current collector in the positive electrode sample was measured using UTM equipment, and TABLE 2 below summarizes the results (90° peeling test, Load Cell: 10N, Speed: 100 mm/min).

**[TABLE 2]**

| | Adhesion strength (gf/2cm) |
|---|---|
| Example 1 | 45.3 |
| Example 2 | 35.5 |
| Example 3 | 37.7 |
| Example 4 | 48.5 |
| Comparative Example 1 | 17.3 |
| Comparative Example 2 | 40.4 |
| Comparative Example 3 | 9.9 |
| Comparative Example 4 | 23.8 |

Referring to the above TABLE 2, the positive electrodes according to Comparative Examples 1 and 3 did not include styrene-butadiene rubber and the measured adhesion strength was very low. In addition, the positive electrode according to Comparative Example 4 did not include polyacrylamide, and the measured adhesion strength was low.

### Example 5

The positive electrode manufactured in Example 1 was prepared, and a 60 µm-thick lithium metal was prepared as a negative electrode.

The positive electrode and the negative electrode were placed with a polyethylene separator having a thickness of 16 µm and a porosity of 46 vol% interposed between them to prepare an electrode assembly.

The as-prepared electrode assembly was placed in a pouch-shaped case and an electrolyte solution was injected into the case at an E/S ratio of 3.0 g/g to manufacture a lithium-sulfur battery, wherein the electrolyte solution contains 0.75 M lithium salt (LiTFSI) and 3 wt% of lithium nitrate (LiNO₃) dissolved in a solvent in which dimethoxyethane:2-methylfuran (2-MeF) is mixed at a volume ratio of 8: 2.

### Example 6

A lithium-sulfur battery was manufactured in the same way as Example 5, except that the positive electrode manufactured in Example 2 was used.

### Example 7

A lithium-sulfur battery was manufactured in the same way as Example 5, except that the positive electrode manufactured in Example 3 was used.

### Example 8

A lithium-sulfur battery was manufactured in the same way as Example 5, except that the positive electrode manufactured in Example 4 was used.

### Comparative Example 6

An attempt was made to manufacture a lithium-sulfur battery in the same way as Example 5, except that the positive electrode manufactured in Comparative Example 1 was used, but it failed to manufacture the battery due to low adhesion strength of the positive electrode.

### Comparative Example 7

A lithium-sulfur battery was manufactured in the same way as Example 5, except that the positive electrode manufactured in Comparative Example 2 was used.

### Comparative Example 8

A lithium-sulfur battery was manufactured in the same way as Example 5, except that the positive electrode manufactured in Comparative Example 3 was used.

### Comparative Example 9

A lithium-sulfur battery was manufactured in the same way as Example 5, except that the positive electrode manufactured in Comparative Example 4 was used.

### Experimental Example 2: Output test

The lithium-sulfur batteries manufactured in Examples 5 to 8 and Comparative Examples 7 to 9 were prepared. For each lithium-sulfur battery, a hybrid pulse power characterization (HPPC) test was performed at 25°C. In this instance, the lithium-sulfur battery at SOC 75 was discharged at 5C for 10 seconds, and the output was calculated by dividing by the weight of each lithium-sulfur battery.

**[TABLE 3]**

| | Output (Wh/kg) |
|---|---|
| Example 5 | 2.51 |
| Example 6 | 2.61 |
| Example 7 | 2.55 |
| Example 8 | 2.33 |
| Comparative Example 7 | 2.11 |
| Comparative Example 8 | 2.17 |
| Comparative Example 9 | 2.61 |

Referring to the above TABLE 3, it was confirmed that the lithium-sulfur battery according to Comparative Example 7 included excessive polyacrylamide in the positive electrode active material layer, and the measured output was low. In the case of the lithium-sulfur battery according to Comparative Example 8, polyacrylamide was used in a sufficient amount when manufacturing the positive electrode, but carboxymethyl cellulose was not used, thereby failing to form the positive electrode active material layer with a proper thickness, resulting in low output. The lithium-sulfur battery according to Comparative Example 9 used polyacrylamide and carboxymethyl cellulose, and the measured output was high.

In contrast, it was confirmed that all the lithium-sulfur batteries according to the embodiments of the present disclosure exhibited high output when measured.

Although the present disclosure has been hereinabove described with respect to certain number of embodiments, the present disclosure is not limited thereto, and it is obvious to persons having ordinary skill in the technical field pertaining to the present disclosure to make various changes and modifications within the technical scope of the present disclosure and the appended claims and their equivalents.

## Claims

1. A positive electrode for a lithium-sulfur battery, comprising:
a positive electrode current collector; and a positive electrode active material layer present on at least one surface of the positive electrode current collector,
wherein the positive electrode active material layer includes a sulfur-carbon composite; and a binder polymer, and
wherein the binder polymer includes a polyacrylic acid, a polyacrylamide, a carboxymethyl cellulose and a styrene-butadiene rubber.

2. The positive electrode for the lithium-sulfur battery according to claim 1,
wherein the binder polymer is included in an amount of 1 to 10 parts by weight based on total 100 parts by weight of the total positive electrode active material layer.

3. The positive electrode for the lithium-sulfur battery according to claim 1,
wherein the polyacrylic acid is included in an amount of 5 to 30 parts by weight based on total 100 parts by weight of the binder polymer.

4. The positive electrode for the lithium-sulfur battery according to claim 1,
wherein the polyacrylic acid is included in an amount of 5 to 25 parts by weight based on total 100 parts by weight of the binder polymer.

5. The positive electrode for the lithium-sulfur battery according to claim 1,
wherein the polyacrylamide is included in an amount of 10 to 35 parts by weight based on total 100 parts by weight of the binder polymer.

6. The positive electrode for the lithium-sulfur battery according to claim 1,
wherein the polyacrylamide is included in an amount of 10 to 31.25 parts by weight based on total 100 parts by weight of the binder polymer.

7. The positive electrode for the lithium-sulfur battery according to claim 1,
wherein the carboxymethyl cellulose is included in an amount of 10 to 20 parts by weight based on total 100 parts by weight of the binder polymer.

8. The positive electrode for the lithium-sulfur battery according to claim 1,
wherein the carboxymethyl cellulose is included in an amount of 12.5 to 20 parts by weight based on total 100 parts by weight of the binder polymer.

9. The positive electrode for the lithium-sulfur battery according to claim 1,
wherein the styrene-butadiene rubber is included in an amount of 40 to 60 parts by weight based on total 100 parts by weight of the binder polymer.

10. The positive electrode for the lithium-sulfur battery according to claim 1,
wherein the styrene-butadiene rubber is included in an amount of 45 to 60 parts by weight based on total 100 parts by weight of the binder polymer.

11. The positive electrode for the lithium-sulfur battery according to claim 1,
wherein an adhesion strength between the positive electrode current collector and the positive electrode active material layer is 35 gf/2cm or more.

12. A lithium-sulfur battery comprising a positive electrode; a negative electrode; and an electrolyte solution,
wherein the positive electrode is the positive electrode for the lithium-sulfur battery according to any one of claims 1 to 11.

13. The lithium-sulfur battery according to claim 12,
wherein the lithium-sulfur battery has an output of 2.2 Wh/kg or more.

14. The lithium-sulfur battery according to claim 12, further comprising:
a separator present between the positive electrode and the negative electrode.
